## Europäisches Patentamt
## European Patent Office
## Office européen des brevets

(19)

(11) Publication number: **0 041 317**
**B1**

(12) **EUROPEAN PATENT SPECIFICATION**

(45) Date of publication of patent specification: **27.08.86**

(21) Application number: **81301822.3**

(22) Date of filing: **24.04.81**

(51) Int. Cl.⁴: **C 21 D 1/10**

(54) Method and apparatus for inductively heating valve seat inserts for hardening the seat surfaces.

<table>
<tr><td>

(30) Priority: **08.05.80 US 147829**

(43) Date of publication of application:
**09.12.81 Bulletin 81/49**

(45) Publication of the grant of the patent:
**27.08.86 Bulletin 86/35**

(84) Designated Contracting States:
**DE FR GB IT NL SE**

(56) References cited:
**DE-A-2 314 840**
**DE-B-1 035 179**
**DE-B-1 583 338**
**DE-C- 767 227**
**US-A-3 761 669**
**US-A-3 837 934**
**US-E- 29 046**

</td><td>

(73) Proprietor: **PARK-OHIO INDUSTRIES, INC.**
**3800 Harvard Avenue**
**Cleveland Ohio 44105 (US)**

(72) Inventor: **Cachat, John Francis**
**1737 South Bend Drive**
**Rocky River Ohio 44116 (US)**

(74) Representative: **Abbie, Andrew Kenneth et al**
**A.A. THORNTON & CO. Northumberland House**
**303/306 High Holborn**
**London, WC1V 7LE (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to forming a valve seat in an engine component such as an engine head.

More particularly the invention is concerned with a method of forming a valve seat in an engine component which includes inserting an insert of hardenable ferrous material in an engine component and thereafter inductively heating the insert to effect hardening of a valve seat surface defined by the insert. Such a method, in which both the insert and the engine component comprise ferrous materials is disclosed in DE—A—1,035,179, which has been drawn to our attention by the European Patent Office during the prosecution of this application.

The present invention is particularly applicable to forming exhaust valve seats in an aluminium cast engine head using ferrous inserts which are inductively heated after insertion into the engine head, and will be described with reference to such an application. However, it is to be understood that the invention is applicable to forming various types of valve seats in engine components of various materials using ferrous cylindrical inserts which are inductively heated.

By way of background information, internal combustion engines generally employ frusto-conically shaped valve seats which coact with reciprocating poppet valves for controlling flow of gases to and from the engine cylinders. During operation of the engine, the exhaust valves are subjected to extremely high temperatures and therefore experience a substantial amount of wear. To counteract this wear and increase the physical properties of the exhaust valve seat, the conical surface of the exhaust valve seat may be inductively heated during manufacture thereof. Subsequent to this inductive heating, the valve seat is quench hardened through conventional liquid or mass quenching. Induction heating of multiple valve seats in an engine component may be adapted to automatic processing of the engine head in a single operation such as by the use of a gang type induction heating apparatus wherein a like multiple of single turn inductors are individually positioned immediately adjacent to the conically shaped exhaust valve seats. Additionally, it is necessary to provide accurate and uniform magnetic coupling between the separate inductors and the conical surface of the valve seats.

U.S. Patent No. Re 29,046 discloses an apparatus for positioning circular inductors a common, preselected distance from conical surfaces of a body member, when such surfaces are to be inductively heated by the apparatus. The inductors are independently, reciprocably movable perpendicular to the body member or valve seats and biased in a direction toward the valve seats. A common frame from which the inductors are outwardly biased is moved into contact with the engine component and each inductor contacts the valve seat which it is to heat. Prior to moving the frame backwardly a distance generally corresponding to the desired magnetic coupling distance for the separate inductors, the inductors are locked to the frame. U.S. Patent Nos. 3,761,669 and 3,777,096 assigned to us, also disclose similar apparatus.

The above-identified U.S. Patent No. Re 29,046 is concerned primarily with induction heating of exhaust valve seats in a gray cast iron, engine head. As a direct result of efforts to increase gasoline mileage and the consequential reduction in weight of motor vehicles, aluminium is increasingly used in engine components. While the use of aluminium for the manufacture of the major components of the engine, engine block and head, provide substantial benefit in weight reduction of the total engine, the re-engineering of significant mechanical portions of the engine are necessitated by the use of aluminium in these major components. Aluminium heads of internal combustion engines, in particular, necessitate re-engineering the manufacturing methods used to provide valve seats therein for conventional overhead valve engine design. In this respect, the aluminium material cannot provide sufficient strength and hardness in order for efficiently wearing valve seat surfaces to be constructed therein.

In order to enable aluminium to be used in internal combustion engine heads, it has been determined that exhaust valve seat surfaces must be provided through the use of an insert constructed of hardenable metal material installed within the aluminium cast head through any suitable process, such as pressure applied force fit or integal casting within the head. Regardless of the method used to produce the aluminium head with metal inserts therein, machining of the inserts subsequent to casting or insertion is required to assure accurate location and concentricity of the valve seat surfaces. Since machining of the frusto-conically shaped valve seat surfaces is not possible once hardening of the material has occurred, the operations of machining and hardening must occur subsequent to installation of the inserts in the aluminium head. Machining of the frusto-conical surface of the insert does not present any unusual problems; however, hardening of the surface must occur without any deleterious effects to the pressure fit between the aluminium head and the metal insert.

The temperature customarily required to sufficiently harden an exhaust valve seat surface is approximately 1700°F (927°C). Depending upon the particular alloy of aluminium used for casting the engine head, the melting point of the casting aluminium ranges from 1200°—1400°F (649°—760°C). Inherent difficulties in hardening an exhaust valve seat insert previously provided within a cast aluminium engine head are readily apparent. Despite the fact that the required heat for hardening might be capable of being directed immediately onto the metal insert to be hardened, conduction of the heat through the insert to the cast aluminium occurs. If the heat to which the surrounding aluminium is subjected, during induction heating of the insert, results in the aluminium becoming expanded, a breakdown of the pressure fit between the metal insert and the cast aluminium head then is likely to occur. Thus, while hardened metal valve seat inserts in aluminium cast engine heads are necessary, and machining and subsequent hardening of the inserts in place in the head is desired, the temperature required to harden the insert heretofore has rendered the hardening impractical in the immediate environment of the cast aluminium.

The present invention includes a method of forming a valve seat in an engine component said method comprising inserting, into a cylindrical recess in the component, a cylindrical insert of hardenable ferrous metal material the inner surface of which is to provide a frusto-conically shaped valve seat surface in the engine component located radially inwardly from the circumferential interface between said ferrous insert and the portion of the engine component immediately surrounding said insert, thereafter machining said surface to assure accurate location and concentricity, and subsequently inductively heating the valve seat surface of the insert for subsequent quench-hardening of the valve seat surface provided in said insert and protecting the regions of said insert and said component adjacent said interface during said inductive heating of the valve seat surface from heating to a temperature sufficient to result in destruction of the pressure fit or bond between said insert and said engine component.

As stated above the present invention is particularly applicable for forming a valve seat in an engine component formed of an aluminium material.

The protecting step may comprise cooling the regions of said insert and said component adjacent said interface during said heating step.

The cooling of workpiece areas not to be hardened during induction heating of areas to be hardened is disclosed generally in DE—C—767227 which has been drawn to our attention by the European Patent Office during the prosecution of this application.

The protecting step preferably comprises shielding of said interface from stray flux field during said heating step.

In the preferred embodiment of the invention, the method comprises:

(a) providing a single turn inductor having a conical face generally matching said frusto-conical valve seat surface for said inductive heating step;

(b) providing an electrically conducting flux shield ring having a generally cylindrical shape for said protecting step;

(c) mounting said inductor for reciprocal movement with respect to said engine component and in a direction generally parallel to an axis of said cylindrical recess;

(d) mounting said conductive ring exteriorly concentric to an electrically insulated from said inductor and contacting said ring against said insert and the portion of said engine component immediately surrounding said insert;

(e) moving said inductor toward said engine component and positioning said inductor in generally axially aligned relation to said valve seat insert with the said face located opposite and spaced a selected distance from said valve seat surface; and

(f) energizing said inductor to thereby inductively heat said valve seat surface while maintaining said flux shield ring in contact with said insert and surrounding engine component portion to prevent flux penetration and inductive heating of said engine component portion.

The invention also includes an induction heating device for heating a frusto-conical valve seat surface of a valve seat ring insert in an engine component preparatory to quench hardening, said device comprising: a generally circular inductor having a central axis and a concentric frusto-conical face generally matching said frusto-conical valve seat surface, a pair of input leads for energizing said inductor, carrier means supporting said inductor for movement axially toward and transversely of said valve seat insert to position the said inductor in an operative inductive heating position concentrically about, and with its said frusto-conical face disposed parallel to and opposite said valve seat surface and spaced a selected distance therefrom, and an electrically conducting flux shield ring electrically insulated from and positioned concentrically about said inductor and arranged to be in pressure surface contact with the portion of said engine component immediately surrounding said valve seat insert, in the said operative heating position of the inductor, to thereby shield said surrounding engine component portion from penetration and inductive heating by stray flux from said inductor.

In order that the invention may be well understood, the preferred embodiment thereof, referred to above and given by way of example only, will now be described in more detail, reference being made to the accompanying drawings, in which:

Figure 1 is a partial cross-sectional view illustrating the preferred embodiment of the present invention;

Figure 2 is a partial cross-sectional view further illustrating the preferred embodiment of the present invention; and,

Figure 3 is a cross-sectional view taken generally along line 3—3 of Figure 2.

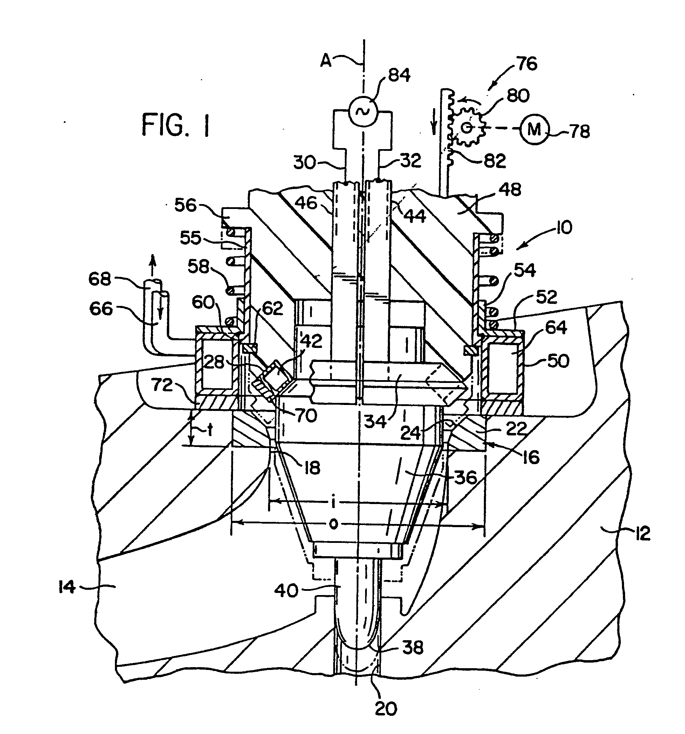

Figure 1 shows an induction heating device 10 and a cast aluminium engine head 12 operatively positioned relative to one another. Engine head 12 includes at least one exhaust passageway 14 having a valve seat insert 16 within a recessed cylindrical exhaust port 18 having a central axis A. The engine head 12 is further provided with a guide bore 20 coaxial with the exhaust port axis A and through which a stem of a normal poppet valve (not shown) of an internal combustion engine is adapted to extend. Insert 16 comprises a ring 22 having an inner diameter 'i', outer diameter 'o', and thickness 't'. The specific dimensions of ring 22 may be of any suitable size convenient for ease of manufacture of the ring and compatible with the particular engine head. Inner surface of insert 16 is provided with a frusto-conically shaped valve seat surface 24 which is spaced radially inwardly from the circumferential interface between the insert 16 and the portion of the engine component immediately surrounding the insert. Insert 16 is installed within cast aluminium engine head 12 by any one of a number of conventional methods, such as by a pressure force fit or by integral casting. The insert is a standard component of hardenable ferrous material and is usually made of steel, cast iron or sintered powdered iron.

Induction heating of the valve seat in preparation for the hardening thereof may encompass simultaneous inductive heating of multiple valve seat inserts 16. In such a case, precise positioning of each independent induction device 10 relative to each of the several frusto conical seat surfaces to provide the same preselected magnetic coupling gap between the respective inductors and valve seat inserts becomes extremely important. The apparatus of the above mentioned U.S. Patent No. Re 29,046 would be functional for such purpose, with substitution of the illustrated induction heating device 10 of the preferred embodiment of the present invention, to simultaneously inductively heat the multiple valve seat inserts to the required processing temperature.

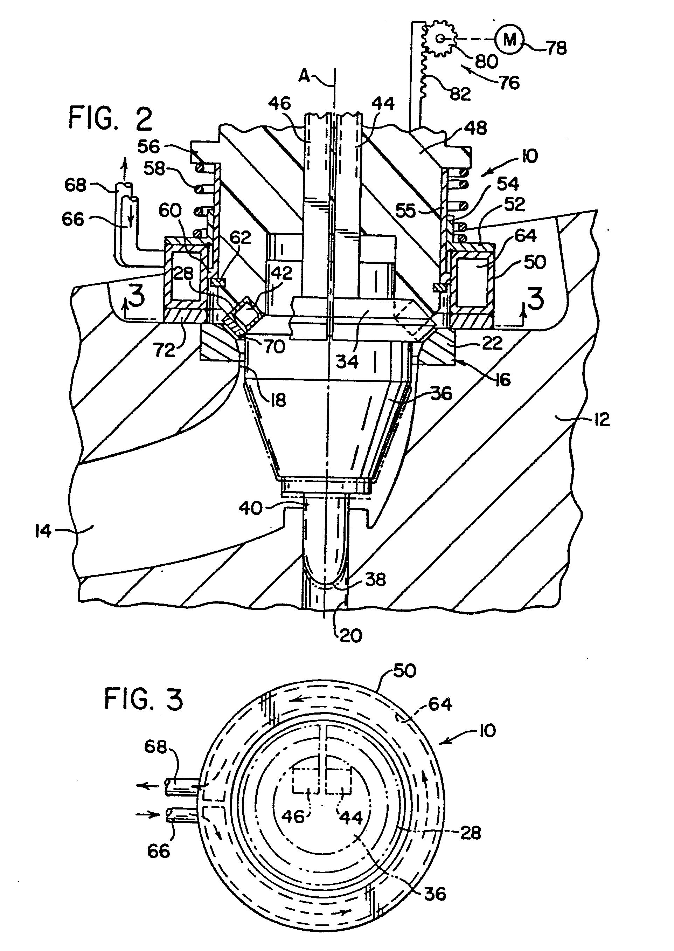

Referring now more particularly to Figures 1 and 2, inductor device 10 is shown to include a generally circular, single turn inductor 28 having a face generally matching the valve seat surface 24. Inductor 28 is a split circular hollow ring 34 of copper, more clearly indicated in Figure 3, and has connector leads 30 and 32 electrically connected to opposite ends of split hollow ring 34. Inductor 28 may, in fact, be somewhat elliptical to provide uniform heating as is known in the art. At one end of inductor device 10 there is provided an electrically insulated insert 36 in the inductor device 10 which holds the inductor 28 in place therein and also supports an outwardly extending tip member 38. Tip 38 includes a cylindrical shaft 40 dimensioned to coact with the valve stem receiving bore 20 of engine head 12 to axially align the inductor device 10 with the exhaust port 18. Shaft 40 is intended to register with bore 20 as inductor device 10 moves toward the engine head and causes inductor 28 to shift radially into concentric relationship and axially align with frusto-conical valve seat surface 24.

There is provided a system for cooling inductor 28 by the passage of a suitable coolant through the hollow interior 42 of the inductor ring 34. The coolant flows from a source of supply thereof (not shown) through an inlet tube 44 communicating with the hollow interior of the split ring 34 at one end and then flows out the other end of the split ring 34 through an outlet tube 46. The coolant is required to have a temperature maintained at a preselected level through a device (not shown) which does not form part of the instant invention.

As noted above, inductive heating of a metal insert 16 immediately adjacent to and within the cast aluminium mass comprising engine head 12 may result in deterioration of the pressure fit between the insert and the head and damage the aluminium metal of the head. For purpose of avoiding this pressure fit deterioration and metal damage, the regions of the insert and the engine head adjacent the circumferential interface therebetween is protected from heating to a temperature sufficient to result in distruction of the pressure fit or bond between the insert and the engine head during inductive heating of the valve seat surface by a cylindrical ring or flux shield 50 constructed of a material also readily conductive to the conduction of heat therethrough, namely copper, which shield 50 is arranged to concentrically surround body 48 of inductor device 10 and contact the insert 16 and immediately surrounding portion of the engine head 12 when the inductor 28 is in its operative position for inductive heating of the valve seat insert 16. For this purpose, the conductive ring or shield 50 is made of smaller inside diameter than the outside diameter of the insert 16, and it may be either mounted on and carried by the body 48 of the inductor device 10 as shown in the form of the invention illustrated in the drawings, or it may be separate therefrom and moved into its operative position shown in the drawings by suitable operating means (not shown). Body 48 is constructed of any suitable electrically and thermally insulating material. This insulating material prevents electrical current from being conducted between contacts 30 and 32 of the inductor and to conducting ring or shield 50 and also prevents heat from being conducted to inductor device 10.

In the embodiment of the invention shown in the drawings, the conducting ring 50 is mounted on the body 48 for axial movement relative to the inductor device 10, and it is biased outwardly toward the tip end 38 of the inductor device and toward the engine head 12. For this purpose, the conducting ring 50 is provided with a peripheral mounting flange 52 welded or otherwise fastened thereto and having a cylindrical sleeve portion 54 slidable on the body 48 for movement of the ring 50 axially of the inductor device 10. A relative thin bearing sleeve or liner 55 may be provided on the cylindrical exterior surface of body 48 to prevent undue wear of the body by sliding contact with conducting ring 50. The body 48 is also provided with an outwardly extending flange 56, and a compression coil spring 58 is installed between flanges 52 and 56 to provide a continuous axially outward extending force on conducting ring 50. An outwardly extending flange 60 on the lower end of bearing sleeve 55 engages with the underside of the mounting flange 52 on conductor ring 50 to retain the latter in place on the body 48 against the axial force of spring 58. The bearing sleeve 55 is in turn secured in place on the body 48 by a split ring 62 which is snap inserted into an annular groove in the cylindrical outer surface of the body 48 and which allows for assembly of conducting ring 50, bearing sleeve 55 and spring 58 over the body 48. The flanges 60 and 62 are both of smaller outside diameter than the inside diameter of the conductive ring 50 so as not to interfere with the axial sliding movement of the ring 50 along the body 48 in a direction to disengage the flange 52 on the ring from the stop flange 60 on sleeve bearing 55.

It should be understood that when inductor 10 moves toward engine head 12 for the purpose of positioning the inductor 28 immediately adjacent and in its selected magnetically coupled relation to insert 16, conducting ring 50 likewise moves toward engine head 12 and into contact therewith. The relative dimensions of inductor device 10 and conducting ring 50 are arranged to cause the flat bottom surface of the conducting ring to contact the flat coplanar top surfaces of the insert 16 and the immediately surrounding portion of the aluminium mass of which head 12 is constructed. Since conducting ring 50 is biased outwardly relative to the inductor device by spring 58, the conducting ring contacts the head 12 and insert 16 prior to any contact of the insert by the inductor 28, and compression spring 58 undergoes compression as the inductor device 10 continues to move or overtravels toward head 12.

It is contemplated that the conical valve seat surface of the insert 16 be mass quenched, without a quenching liquid, by cooling, after the initial energization of the inductor 28 for a period of approximately 5 to 7 seconds, by the cooling or heat sink action of the surrounding metal of the insert. Thereafter, the inductor can be again energized at a lower power level for a short time, such as 3 to 5 seconds, to further heat the insert before disengagement or removal of the inductor device 10 from the engine head 12.

As in the case of inductor 28, a system for cooling conducting ring 50 is provided. For such purposes, the copper conducting ring 50 is constructed of hollow form to provide an internal cavity or passageway 64 therein. Conducting ring 50 and thus passageway 64 effectively completely encircle inductor device 10, with the ring being a split ring as shown in Figure 3 similar to the inductor. Passageway 64 carries coolant for the purpose of maintaining the temperature of conducting ring 50 at a preselected level. Coolant enters cavity 64 through an inlet 66, flows completely through the cavity and exits through an outlet 68 for return to a device (not shown) which maintains the temperature of the coolant at the preselected level.

Since both inductor 28 and conducting ring 50 are preferably constructed of copper and further are constructed of hollow form to provide respective internal coolant passageways 42 and 64, the resulting strength of the inductor and conducting ring are relatively low. Because the conductive ring 50, and in some cases the inductor 28 also, continuously engage head 12 and insert 16 with a certain degree of pressure thereagainst, the structural integrity of both of these hollow elements 50 and 28 may be fortified. Thus, a relatively thin, electrically conducting metallic layer or pad 70 of copper is secured to the face of inductor 28 to strengthen it. Conducting ring 50 likewise has a thin layer or pad 72 of a suitable heat conducting, metallic material permanently secured to the face thereof, to prevent wear of the ring and strengthen it so as to readily absorb the shock of contact between the conducting ring and head 12. Metallic layer 72 is likewise constructed of copper which is heat conductive so that heat build-up in head 12 and insert 16 transfers therefrom through conducting ring 50 to the coolant flowing through the internal passageway 64 thereof.

Operation of inductor device 10 begins with the positioning of inductor device 10 relative to engine head 12 such that it is generally aligned with the axis A of the exhaust port 18 and with the conical valve seat 24 of insert 16. As noted above, the aluminium head may in fact have a number of exhaust valve ports 18 having inserts 16 which are to be inductively heated simultaneously with apparatus such as shown in U.S. Patent Re 29,046 and provided with a gang of individual inductor devices 10 corresponding in number to the number of exhaust ports 18 with inserts 16 to be heated. With the inductor device 10 positioned generally in alignment with exhaust port 18, a drive mechanism 76 for reciprocating the inductor device 10 is actuated to move the inductor device toward engine head 12. In this regard, a motor 78 causes a gear 80 to rotate in a counter-clockwise direction as shown in Figure 1, which in turn drives rack gear 82 downwardly. Rack gear 82 is connected to inductor device 10 by any suitable means and therefore results in the movement of the inductor device toward head 12. Continued movement of the inductor device 10 toward the engine head 12 results in shaft 40 entering valve guide bore 20 in the engine head to cause alignment of the inductor device relative to exhaust port 18. As inductor device 10 continues to further move toward engine head 13, conducting ring 50 engages the valve seat insert 16 and the immediately surrounding portion of the engine head, as shown in Figure 1.

Drive mechanism 76 continues to move the inductor device 10 further toward head 12 in an overtravel movement, causing flange 56 of body 48 to compress spring 58 and moving the inductor 28 further toward the valve seat 24 of the insert. As noted above, a predetermined magnetic coupling gap between the face of wear pad 70 and valve seat surface 24 is necessary in order to obtain efficient conductive heating of the surface. Accordingly, the drive mechanism 76 may be arranged to move the inductive device 10 downwardly to a selected position providing the appropriate magnetic coupling gap. In the event that a plurality of valve seat inserts 16 are being inductively heated simultaneously in the engine head 12, the multiple inductor devices 10 required in such case may be driven by the drive mechanism 76 to move the inductors 28 into engagement with the respective valve seat inserts 16 in the engine head 12 and the inductor devices 10 then axially backed off to space the inductors 28 the necessary distance from the valve seats 24 to provide the selected magnetic coupling gap between the valve seat 24 of each insert 16 and the opposing face of the wear pad 70 on each inductor 28, as disclosed in the aforementioned U.S. Patent Re 29,046. In practice, the appropriate magnetic coupling gap is approximately .040 inches (1 mm).

Once inductor device 10 has been properly positioned relative to valve seat insert 16, inductor 28 is energized by providing electrical current to leads 30 and 32 from a power supply 84 as shown in Figure 1 to cause inductive heating of the valve seat surface 24 of the insert 16. During this inductive heating of valve seat surface 24, the conductive ring or flux shield 50 acts to shield the aluminium metal of the engine head 12 immediately surrounding the insert 16 from penetration and inductive heating by stray flux generated by the inductor 28. In addition, the cooled conductive ring 50 in contact with this surrounding aluminium metal of the engine head 12 acts as a heat sink to conduct away from and out of the insert 16 and surrounding aluminium metal of the head 12 the heat carried thereinto by conduction from the inductively heated valve seat surface 24. Thus, the ring 50 is used to control the temperature of the valve insert adjacent the circumferential interface between the insert and engine head during the inductive heating of the valve seat surface to limit heat conduction immediately surrounding the insert. This temperature control comprises using the ring 50 to cool the insert adjacent the circumferential interface to cool the engine head adjacent the interface, and to shield the interface from stray flux field. The flux shielding and cooling action of the conductive ring 50 thus combine to effectively prevent excessive heating of the surrounding aluminium metal of the head 12 and resulting destruction of the pressure fit or bond between the valve insert 16 and engine head 12 and damage to the aluminium metal around the insert. Subsequent to the inductive heating of conical valve seat surface 24, the inductor device 10 is removed or disengaged from head 12 by reverse operation of drive mechanism 76, and quenching of the heated valve seat surface 24 may be undertaken by a mechanism not forming part of the present invention.

## Claims

1. A method of forming a valve seat in an engine component (12), said method comprising inserting, into a cylindrical recess (18) in the component, a cylindrical insert (16) of hardenable ferrous metal material the inner surface of which is to provide a frusto-conically shaped valve seat surface (24) in the engine component located radially inwardly from the circumferential interface between said ferrous insert (16) and the portion of the engine component immediately surrounding said insert, thereafter machining said surface (24) to assure accurate location and concentricity, and subsequently, inductively heating the valve seat surface of the insert for subsequent quench-hardening of the valve seat surface (24) provided in said insert and protecting the regions of said insert and said component adjacent said interface during said inductive heating of the valve seat surface from heating to a temperature sufficient to result in destruction of the pressure fit or bond between said insert and said engine component.

2. A method as claimed in claim 1, wherein the engine component (12) is formed of an aluminium material.

3. A method as claimed in claim 1 or 2, wherein the cylindrical insert (16) is inserted into said cylindrical recess so as to have a pressure fit therewith.

4. A method as claimed in claim 1, 2 or 3, wherein said protecting step comprises cooling the regions of said insert and said component adjacent said interface during said heating step.

5. A method as claimed in claim 1, 2 or 3, wherein said protecting step comprises cooling the region of the insert adjacent said interface during said heating step.

6. A method as claimed in any one of claims 1 to 5, wherein said protecting step comprises shielding of said interface from stray flux field during said heating step.

7. A method as claimed in claim 1, 2 or 3, wherein said step of inductively heating the valve seat surface (24) of said insert (16) comprises: providing a ring inductor (28) having a face generally matching said valve seat surface (24); positioning said inductor (28) in generally axially aligned relation to said valve seat insert (16) with the said face located opposite and spaced a selected distance from said valve seat surface (24) and energizing said inductor to inductively heat said valve seat surface.

8. A method as claimed in claim 7, wherein said protecting step comprises positioning a hollow, electrically and heat conductive ring (50) around and electrically insulated from said inductor (28) and in surface contact with both the portion of said insert (16) surrounding and adjacent said valve seat surface (24) and the portion of said engine component (12) immediately surrounding said insert: energizing said inductor (28) to inductively heat said valve seat surface (24), and circulating a coolant through said hollow conducting ring (50) during the said energizing of the inductor, to thereby cool the said portion of said insert and the said surrounding engine component portion during the inductive heating of said valve seat surface.

9. A method as claimed in claim 8, wherein the said conductive ring (50) is formed of copper and shields the said portion of said insert (24) and the said surrounding portion of said engine component (12) from penetration and inductive heating by stray flux generated by said inductor during said energizing thereof.

10. A method as claimed in claim 1, 2 or 3, comprising:

(a) providing a single turn inductor (28) having a conical face generally matching said frusto-conical valve seat surface (24) for said inductive heating step;

(b) providing an electrically conducting flux shield ring (50) having a generally cylindrical shape for said protecting step;

(c) mounting said inductor (28) for reciprocal movement with respect to said engine component (12) and in a direction generally parallel to an axis (A) of said cylindrical recess (18);

(d) mounting said conductive ring (50) exteriorly concentric to and electrically insulated from said inductor (28) and contacting said ring (50) against said insert and the portion of said engine component immediately surrounding said insert;

(e) moving said inductor (28) toward said engine component (12) and positioning said inductor in generally axially aligned relation to said valve seat insert (16) with the said face located opposite and spaced a selected distance from said valve seat surface (29); and

(f) energizing said inductor (28) to thereby inductively heat said valve seat surface while maintaining said flux shield ring in contact with said insert and surrounding engine component .portion to prevent flux penetration and inductive heating of said engine component portion (12).

11. A method as claimed in claim 10, including the further step of mounting said conducting ring (50) for independent reciprocal movement axially of said inductor (28) and moving said conducting ring along with said inductor toward said valve seat insert (16) and into said contact of the ring (50) with said valve seat insert (16) and said surrounding engine component portion as said inductor (28) is moved toward said valve seat insert (16).

12. A method as claimed in claim 10 or 11, including the further step of flowing a coolant through an interior passageway (64) in said conducting ring (50) to cool said ring and the valve insert and surrounding engine component portion in contact with said ring.

13. A method as claimed in any one of claims 7 to 12, wherein said selected distance is approximately .040 inches (1 mm).

14. A method as claimed in any one of claims 7 to 13, including the further step of aligning said inductor (28) in an axial direction with said valve seat insert (16) as said inductor is moving toward said engine component (12).

15. An induction heating device (10) for heating a frusto-conical valve seat surface (24) of a valve seat ring insert in an engine component (12) preparatory to quench hardening, said device (10) . comprising: a generally circular inductor (16) having a central axis (A) and a concentric frusto-conical face generally matching said frusto-conical valve seat surface (14), a pair of input leads (30, 32) for energizing said inductor, carrier means (48) supporting said inductor for movement axially toward and transversely of said valve seat insert (16) to position the said inductor (28) in an operative inductive heating position concentrically about, and with its said frusto-conical face disposed parallel to and opposite said valve seat surface (24) and spaced a selected distance therefrom, and an electrically conducting flux shield ring (50) electrically insulated from and positioned concentrically about said inductor (28) and arranged to be in pressure surface contact with the portion of said engine component (12) immediately surrounding said valve seat insert (16), in the said operative heating position of the inductor, to thereby shield said surrounding engine component portion from penetration and inductive heating by stray flux from said inductor.

16. An induction heating device as claimed in claim 15, wherein the said flux shield ring (50) has a flat annular seating surface disposed concentrically about and in a plane normal to the axis (A) of said inductor (28) for positioning in said pressure surface contact with the said portion of said engine component immediately surrounding said valve insert (16).

17. An induction heating device as claimed in claim 16, wherein the said flat annular seating surface of said. flux shield ring has an inside diameter less than the outside diameter (O) of said valve seat ring insert and is arranged to be also in pressure surface contact with the portion of said valve seat insert surrounding the said conical valve seat surface, in the said operative heating position of said inductor.

18. An induction heating device as claimed in claim 15, wherein the said flux shield ring is arranged to be also in pressure surface contact with the portion of said valve seat insert surrounding the said conical valve seat surface (24), in the said operative heating position of said inductor.

19. An induction heating device as claimed in any one of claims 15 to 18, wherein said flux shield ring (50) is slidably mounted on said carrier means (48) for reciprocating movement thereon axially of said inductor (28), and said device (10) includes means (58) biasing said flux shield ring (50) axially of said inductor (28) in a direction for pressing said ring (50) against and maintaining it in surface contact with said surrounding engine component portion in the said operative heating position of said inductor.

20. An induction heating device as claimed in claim 19, wherein the said biasing means comprises compression coil spring means (58) compressed between said carrier means (48) and said flux shield ring (50).

21. An induction heating device as claimed in claim 19 or 20 and including stop shoulder means (60, 62) on said carrier means (48) for limiting sliding movement of said flux shield ring (50) on said carrier means (48) under the bias of said biasing means (58) at a limiting axial position relative to said inductor in which said ring engages said surrounding engine component portion, during the axial movement of said carrier means and inductor toward its said operative heating position, before the inductor reaches its said operative heating position.

22. An induction heating device as claimed in claim 21, wherein said flux shield ring (50) is provided with a cylindrical sleeve (54) coaxial with said inductor (28) and slidable on said carrier means (48), said sleeve (54) being engageable with said step shoulder means (60, 62) to locate said ring (50) in the said limiting axial position thereof.

23. An induction heating device as claimed in claim 21 or 22, wherein the said stop shoulder means comprises a split ring (62) inserted in an annular groove in said carrier means (48).

24. An induction heating device as claimed in any one of claims 15 to 23, wherein the said flux shield ring (50) is formed of copper.

25. An induction heating device as claimed in any one of claims 15 to 24, wherein the said flux shield ring (50) is hollow and is provided with means (66, 68) for circulating a coolant therethrough.

**Patentansprüche**

1. Verfahren zum Bilden eines Ventilsitzes in einem Maschinenteil (12), wobei dieses Verfahren darin besteht, daß zunächst ein zylindrischer Einsatz (16) aus härtbarem Eisenmetall in eine zylindrische Ausnehmung (18) im Maschinenteil eingeführt wird, wobei die Innenfläche des Einsatzes eine kegelstumpfförmige Ventilsitzfläche (24) in dem Maschinenteil bilden soll, die radial innerhalb von der Umfangsfläche angeordnet ist, die sich zwischen dem Metalleinsatz (16) und demjenigen Teil des Maschinenteiles befindet, der den genannten Einsatz unmittelbar umgibt, daß dann die genannte Fläche (24) bearbeitet wird, um deren genaue Lage und Konzentrizität sicherzustellen, und daß anschleißend die Ventilsitzfläche des Einsatzes induktiv erhitzt wird für eine spätere Abschreckhärtung der in dem Einsatz vorhandenen Ventilsitzfläche (24) und daß die Bereiche des genannten Einsatzes und des der genannten Umfangsfläche benachbarten Maschinenteiles während der induktiven Erhitzung der Ventilsitzfläche vor einer Erwärmung auf eine Temperatur geschütz werden, die ausreicht, um zu einer Beseitigung des Preßsitzes oder der Preßsitzverbindung zwischen dem genannten Einsatz und dem genannten Maschinenteil zu führen.

2. Verfahren nach Anspruch 1, wobei der Maschinenteil (12) aus einem Aluminiumwerkstoff gebildet ist.

3. Verfahren nach Anspruch 1 oder 2, wobei der zylindrische Einsatz (16) derart in die genannte zylindrische Ausnehmung eingeführt wird, daß er in dieser einen Preßsitz hat.

4. Verfahren nach Anspruch 1, 2 oder 3, wobei das erwähnte Schützen die Kühlung der Bereiche des Einsatzes und des der Umfangsfläche benachbarten Teiles während der erwähnten Erhitzung einschließt.

5. Verfahren nach Anspruch 1, 2 oder 3, wobei das erwähnte Schutzen die Kühlung des Bereiches des Einsatzes während des Erhitzens einschließt, welcher der genannten Umfangsfläche benachbart ist.

6. Verfahren nach einem der Ansprüche 1 bis 5, wobei das erwähnte Schützen das Abschirmen der erwähnten Umfangsfläche gegen das Streuflußfeld während des Erhitzens einschließt.

7. Verfahren nach Anspruch 1, 2 oder 3, wobei der Verfahrensschritt des induktiven Erhitzens der Ventilsitzfläche (24) des Einsatzes (16) einschließt: Bereitstellen eines Ringinduktors (28), der eine annähernd auf die genannte Ventilsitzfläche (24) passende Fläche aufweist; Positionieren des Induktors (28) in eine etwa axial fluchtende Lage zu dem genannten Ventilsitzeinsatz (16), wobei sich die genannte Fläche gegenüber und in einem gewählten Abstand von der genannten Ventilsitzfläche (24) befindet, und Zuführen von Energie zu dem Induktor, um die genannte Ventilsitzfläche induktiv zu erhitzen.

8. Verfahren nach Anspruch 7, wobei das erwähnte Schützen einschließt das Positioneren eines hohlen, elektrisch und wärmeleitenden Ringes (50) um und elektrisch isoliert von dem genannten Induktor (28) und in Berührungskontakt sowohl mit demjenigen Teil des Einsatzes (16), der die Ventilsitzfläche (24) umgibt und in deren Nähe liegt, als auch mit demjenigen Teil des genannten Maschinenteiles (12), welcher den Einsatz unmittelbar umgibt: Zufuhr von Energie zu dem Induktor (28), um die genannte Ventilsitzfläche (24) induktiv zu erhitzen, und Zirkulierenlassen eines Kühlmittels durch den hohlen, leitenden Ring (50) während der Energiezufuhr zum Induktor, um hierbei den genannten Teil des genannten Einsatzes und den genannten umgebenden Maschinenteil während der induktiven Erhitzung der genannten Ventilsitzfläche zu kühlen.

9. Verfahren nach Anspruch 8, wobei der genannte leitende Ring (50) aus Kupfer hergestellt ist und den genannten Teil des genannten Einsatzes (24) und den umgebenden Teil des genannten Maschinenteils (12) vor dem Eindringen und dem induktiven Erhitzen durch einen Streufluß schützt, der von dem genannten Induktor während der Energiezufuhr zu diesem erzeugt wird.

10. Verfahren nach Anspruch 1, 2 oder 3, welches einschließt:

(a) Vorsehen eines einzelnen Drehinduktors (28), der eine konische Fläche aufweist, die etwa auf die kegelstumpfförmige Ventilsitzfläche (24) paßt, für das erwähnte induktive Erhitzen;

(b) Vorsehen eines elektrisch leitenden Flußabschirmringes (50) von etwa zylindrischer Gestalt für das genannte Schützen;

(c) Einbau des genannten Induktors (28) so, daß er sich gegenüber dem genannten Maschinenteil (12) hin und her und in einer etwa zu einer Achse (A) der genannten zylindrischen Ausnehmung (18) parallelen Richtung bewegen kann;

(d) Einbauen des genannten leitenden Ringes (50) außerhalb konzentrisch zu und elektrisch isoliert von dem genannten Induktor (28) und Inberührungbringen des Ringes (50) mit dem Einsatz und dem diesen Einsatz unmittelbar umgebenden Teil des genannten Maschinenteiles;

(e) Bewegen des genannten Induktors (28) gegen den genannten Maschinenteil (12) und Instellungbringen des genannten Induktors in etwa axial fluchtender Lage zu dem Ventilsitzeinsatz (16), wobei sich die genannte Fläche gegenüber und in einem gewählten Abstand von der genannten Ventilsitzfläche (29) befindet; und

(f) Versorgen des genannten Induktors (28) mit Energie, um hierdurch die genannte Ventilsitzfläche induktiv zu erhitzen, während der genannte Flußabschirmring in Berührung mit dem Einsatz gehalten wird und den Teil des Maschinenteiles umgibt, um das Eindringen eines Streuflusses und die induktive Erhitzung des genannten Teiles des Maschinenteils (12) zu verhindern.

11. Verfahren nach Anspruch 10, das den weiteren Schritt der Befestigung des leitenden Ringes (50) zur unabhängigen, axialen Hin- und Herbewegung des genannten Induktors (28) und das Bewegen des genannten leitenden Ringes zusammen mit dem Induktor gegen den Ventilsitzeinsatz (16) und in den Berürungskontakt des Ringes (50) mit dem genannten Ventilsitzeinsatz (16) und dem genannten umgebenden Teil des Maschinenteiles enthält, während der genannte Induktor (28) gegen den genannten Ventilsitzeinsatz (16) bewegt wird.

12. Verfahren nach Anspruch 10 oder 11, das den weiteren Schritt des Fließenlassens eines Kühlmittels durch einen inneren Durchgang (64) in dem genannten leitenden Ring (50) zum Kühlen des Ringes und des Ventilsitzeinsatzes und des mit dem genannten Ring in Berührung stehenden, umgebenden Teiles des Maschinenteiles einschließt.

13. Verfahren nach einem der Ansprüche 7 bis 12, wobei der gewählte Abstand annähernd 0,040 Zoll (1 mm) beträgt.

14. Verfahren nach einem der Ansprüche 7 bis 13, das den weiteren Schritt des Ausfluchtens des Induktors (28) in einer Axialrichtung mit dem genannten Ventilsitzeinsatz (16) einschließt, wenn sich der genannte Induktor gegen den genannten Maschinenteil (12) bewegt.

15. Eine Induktionsheizvorrichtung (10) zum Erhitzen einer kegelstumpfförmigen Ventilsitzfläche (24) eines Ventilsitzringeinsatzes in einem Maschinenteil (12) also Vorbereitung auf eine Abschreckhärtung, wobei die Vorrichtung (10) aufweist: einen etwa kreisförmigen Induktor (16) mit einer Mittelachse (A) und einer konzentrischen, kegelstumpfförmigen Fläche, die etwa auf die genannte kegelstumpfförmige Ventilsitzfläche (14) paßt, ein Paar Zuleitungen (30, 32) für die Energiezufuhr zu dem Induktor, Tragmittel (48) zum Tragen des Induktors bei seiner Bewegung axial in Richtung auf und quer zu dem genannten Ventilsitzeinsatz (16), um den Induktor (28) in eine wirksame Induktionsheizlage zu bringen, in der sich der Induktor konzentrisch und mit seiner kegelstumpfförmigen Fläche parallel zu und gegenüber der genannten Ventilsitzfläche (24) und in einem gewählten Abstand hiervon befindet, und einen elektrisch leitenden Kraftflußabschirmring (50), der elektrisch isoliert konzentrisch um den genannten Induktor (28) so angeordnet ist, daß er in der genannten wirksamen Heizstellung des Induktors sich unter Druck in Oberflächenkontakt mit dem Teil des Maschinenteils (12) befindet, der den Ventilsitzeinsatz (16) unmittelbar umgibt, um hierdurch den den Maschinenteil umgebenden Teil vor dem Eindringen und der induktiven Erhitzung durch einen vom Induktor ausgehenden Streufluß zu schützen.

16. Eine Induktionsheizvorrichtung, wie sie in Anspruch 15 beansprucht ist, bei der der Streuflußabschirmring (50) eine flache, ringförmige Sitzfläche hat, die konzentrisch und in einer zur Achse (A) des Induktors (28) normalen Ebene angeordnet ist, um ihn in dem erwähnten Druckflächenkontakt mit dem Teil des Maschinenteiles zu positionieren, der unmittelbar den Ventilsitzeinsatz (16) umgibt.

17. Induktionsheizvorrichtung, wie sie in Anspruch 16 beansprucht ist, wobei die erwähnte flache ringförmige Sitzfläche des Streuflußabschirmringes einen Innendurchmesser aufweist, der kleiner ist als der Außendurchmesser (0) des Ventilsitzringeinsatzes, und wobei die Sitzfläche in der wirksamen Heizstellung des Induktors sich ebenfalls in Druckflächenkontakt mit dem Teil des Ventilsitzeinsatzes befindet, der die konische Ventilsitzfläche umgibt.

18. Induktionsheizvorrichtung, wie sie in Anspruch 15 beansprucht ist, wobei der Streuflußabschirmring sich in der wirksamen Heizstellung des Induktors auch in Druckflächenkontakt mit dem Teil des Ventilsitzeinsatzes befindet, der die konische Ventilsitzfläche (24) umgibt.

19. Induktionsheizvorrichtung, wie sie in irgendeinem der Ansprüche 15 bis 18 beansprucht ist, wobei der erwähnte Streufußabschirmring (50) auf dem Tragmittel (48) in Axialrichtung des Induktors (28) hin- und herbeweglich gleitend montiert ist und wobei die genannte Vorrichtung (10) Mittel (58) einschließt, welche den Streuflußabschirmring (50) axial zu dem genannten Induktor (28) in eine Richtung drücken, in der der genannte Ring (50) in der erwähnten wirksamen Heizstellung des Induktors in Flächenkontakt mit dem erwähnten Umgebungsteil des Maschinenteiles gedrückt und in dieser Stellung gehalten wird.

20. Eine Induktionsheizvorrichtung, wie sie in Anspruch 19 beansprucht ist, wobei die erwähnten Druckmittel Druckfedermittel (58) aufweisen, die zwischen dem Tragmittel (48) und dem Streuflußabschirmring (50) zusammengedrückt werden.

21. Eine Induktionsheizvorrichtung, wie sie in Anspruch 19 oder 20 beansprucht ist und die Anschlagschultermittel (60, 62) auf dem Tragmittel (48) einschließen, um die Gleitbewegung des Streuflußabschirmringes (50) auf dem Tragmittel (48) unter dem Druck der Druckmittel (58) in einer Axialgrenzstellung gegenüber dem Induktor zu begrenzen, in welcher der Abschirmring am Umgebungsteil de Maschinenteiles während der Axialbewegung des Trägermittels und des Induktors in Richtung auf dessen wirksame Heizstellung anliegt, bevor der Induktor seine wirksame Heizstellung erreicht.

22. Eine Induktionsheizvorrichtung, wie sie in Anspruch 21, beansprucht ist, wobei der Kraftflußabschirmring (50) mit einer zylindrischen Buchse (54) versehen ist, die koaxial zu dem erwähnten Induktor (28) und auf dem Tragmittel (48) gleitbar ist, wobei die genannte Buchse (54) mit dem genannten Stufenschultermitteln (60, 62) in Eingriff kommen kann, um den genannten Ring (50) in seiner axialen Begrenzungslage festzuhalten.

23. Eine Induktionsheizvorrichtung, wie sie in Anspruch 21 oder 22 beansprucht ist, wobei das erwähnte Anschlagschultermittel einen Spaltring (62) enthält, der in eine ringförmige Nute in dem erwähnten Tragmittel (48) eingefügt ist.

24. Eine Induktionsheizvorrichtung, wie sie in einem der Ansprüche 15 bis 23 beansprucht ist, wobei der Kraftflußabschirmring (50) aus Kupfer hergestellt ist.

25. Eine Induktionsheizvorrichtung, wie sie in irgendeinem der Ansprüche 15 bis 24 beansprucht ist, wobei der erwähnte Kraftflußabschirmring (50) hohl und mit Mitteln (66, 68) versehen ist, um ein Kühlmittel hindurchzirkulieren zu lassen.

## Revendications

1. Procédé pour former un siège de soupape dans un élément de moteur (12), ledit procédé consistant à insérer dans une cavité cylindrique (18) ménagée dans l'élément une insertion cylindrique (16) faite d'une matière métallique ferreuse trempante dont la surface interne doit former la surface de siège de soupape de forme tronconique (24) logée dans l'élément de moteur, qui est située radialement à l'intérieur par rapport à l'interface circonférentielle séparant ladite insertion ferreuse (16) de la partie de l'élément de moteur qui entoure immédiatement ladite insertion, puis à usiner ladite surface (24) pour garantir la précision du positionnement et de la concentricité, puis à chauffer la surface de siège de soupape de l'insertion par induction pour procéder ensuite à la trempe de la surface de siège de soupape (24) formée dans ladite insertion, et à protéger les régions de ladite insertion et dudit élément qui sont adjacentes à ladite interface pendant ledit chauffage par induction de la surface du siège de soupape d'un échauffement à une température suffisante pour entraîner une destruction de l'ajustement par pression ou de la liaison entre ladite insertion et ledit élément de moteur.

2. Procédé selon la revendication 1, dans lequel l'élément de moteur (12) est fait d'une matière du type aluminium.

3. Procédé selon la revendication 1 ou la revendication 2, dans lequel l'insertion cylindrique (16) est insérée dans une cavité cylindrique de façon à être ajustée par pression dans cette cavité.

4. Procédé selon l'une des revendications 1, 2 et 3, dans lequel ladite phase de protection consiste à refroidir les régions de ladite insertion et dudit élément qui sont adjacentes à ladite interface pendant ladite phase de chauffage.

5. Procédé selon l'une des revendications 1, 2 et 3, dans lequel ladite phase de protection consiste à refroidir la région de l'insertion adjacente à ladite interface pendant ladite phase de chauffage.

6. Procédé selon l'une quelconque des revendications 1 à 5, dans lequel ladite phase de protection consiste à protéger ladite interface du champ de flux de dispersion pendant ladite phase de chauffage.

7. Procédé selon l'une des revendications 1, et 3, dans lequel ladite phase de chauffage par induction de la surface de siège de soupape (24) de ladite insertion (16) consiste à: prévoir un inducteur annulaire (28) présentant une face qui épouse sensiblement ladite surface de siège de soupape (24); positioner ledit inducteur (28) dans une position relative sensiblement alignée axialement sur ladite insertion de siège de soupape (16) et de façon que ladite face soit placée face à ladite surface de siège de soupape (24) et espacée d'une distance choisie de cette surface; et exciter ledit inducteur pour chauffer ladite surface de siège de soupape par induction.

8. Procédé selon la revendication 7, dans lequel ladite phase de protection consiste à positionner un anneau creux (50) conducteur de l'électricité et de la chaleur autour dudit inducteur (28), en le maintenant isolé électriquement de cet inducteur, et en contact par aire de surface à la fois avec la partie de ladite insertion (16) qui entoure ladite surface de siège de soupape (24) et adjacente à cette surface, et avec la partie dudit élément de moteur (8) qui entoure immédiatement ladite insertion; exciter ledit inducteur (28) pour chauffer par induction ladite surface de siège de soupape (24); et faire circuler un réfrigérant à travers ledit anneau conducteur (50) pendant ladite excitation de l'inducteur, pour refroidir par ce moyen ladite partie de l'insertion et ladite partie environnante de l'élément de moteur pendant le chauffage par induction de ladite surface de siège de soupape.

9. Procédé selon la revendication 8, das lequel ledit anneau conducteur (50) est formé de cuivre et protège ladite partie de ladite (16) et ladite partie environnante dudit élément de moteur (12) de la pénétration par le flux de dispersion engendré par ledit inducteur pendant ladite excitation de cet appareil, et du chauffage par induction par ce flux de dispersion.

10. Procédé selon l'une des revendications 1, 2 et 3, consistant à:

a) prévoir un inducteur à spire unique (28) présentant une face conique qui épouse sensiblement ladite surface de siège de soupape tronconique (24), pour ladite phase de chauffage par induction;

b) prévoir un anneau écran de flux (50), conducteur de l'électricité, possédant une forme générale cylindrique, pour ladite phase de protection;

c) monter ledit inducteur (28) mobile en mouvement alternatif par rapport audit élément de moteur (12) et dans une direction sensiblement parallèle à une axe (A) de ladite cavité cylindrique (18);

d) monter ledit anneau conducteur (50) dans un état extérieurement concentrique audit inducteur (28) et isolé électriquement de cet inducteur et mettre ledit anneau (50) en contact avec ladite insertion et avec la partie dudit élément de moteur qui entoure immédiatement ladite insertion;

e) rapprocher ledit inducteur (28) dudit élément de moteur (12) et positionner ledit inducteur dans une position relative sensiblement alignée sur ladite insertion de siège de soupape (16), avec ladite face placée en face de ladite surface de siège de soupape (24) et espacée de cette surface d'une distance choisie; et

f) exciter ledit inducteur (28) pour chauffer ainsi par induction ladite surface de siège de soupape tout en maintenant ledit anneau écran de flux en contact avec ladite insertion et avec ladite partie environnante de l'élément de moteur pour empêcher la pénétration du flux dans ladite partie de l'élément du moteur et son chauffage par induction.

11. Procédé selon la revendication 10, comprenant la phase additionnelle consistant à: monter ledit anneau conducteur (50) de façon qu'il puisse décrire un mouvement alternatif indépendant dans la direction axiale dudit inducteur (28) et rapprocher ledit anneau conducteur avec ledit inducteur de ladite insertion de siège de soupape (16), en mettant ainsi l'anneau (50) en contact avec ladite insertion de siège de soupape (16) et avec ladite partie environnante de l'élément du moteur lorsque ledit inducteur (28) est rapproché de ladite insertion de siège de soupape (16).

12. Procédé selon l'une des revendications 10 et 11, comprenant la phase additionnelle consistant à faire circuler un réfrigérant dans une passage intérieur (64) dudit anneau conducteur (50) pour refroidir ledit anneau et l'insertion de siège de soupape ainsi que la partie environnante de l'élément de moteur qui est en contact avec ledit anneau.

13. Procédé selon l'une quelconque des revendications 7 à 12, dans lequel ladite distance choisie est d'environ 1 mm (0,40 pouce).

14. Procédé selon l'une quelconque des revendications 7 à 13, comprenant la phase additionnelle consistant à aligner ledit inducteur (28) dans la direction axiale sur ladite insertion de siège de soupape (16) lorsque ledit inducteur se rapproche dudit élément de moteur (12).

15. Dispositif de chauffage par induction (10) destiné à chauffer une surface de siège de soupape tronconique (24) qui appartient à une insertion annulaire de siège de soupape contenue dans un élément de moteur (12) à titre de préparation à la trempe, ledit dispositif comprenant: un inducteur (28) de forme générale circulaire présentant un axe central (A) et une face tronconique concentrique qui épouse sensiblement ladite surface de siège de soupape tronconique (24), deux conducteurs d'entrée (30, 32) pour l'excitation dudit inducteur, des moyens supports (48) qui supportent ledit inducteur avec possibilité de le déplacer axialement vers ladite insertion de siège de soupape (16) et transversalement à cette insertion, afin de positionner ledit inducteur (28) dans une position de travail et de chauffage par induction, concentriquement autour de ladite surface du siège de soupape, et avec sa face tronconique disposée parallèlement et face à ladite surface de siège de soupape (24) et espacée de cette surface d'une distance choisie, et un anneau conducteur de l'électricité (50), formant écran de flux isolé électriquement dudit inducteur et positionné concentriquement autour de cet inducteur (28), et disposé pour être en contact par aire de surface et sous pression avec la partie dudit élément de moteur (12) qui entoure directement ladite insertion de siège de soupape (16) dans ladite position de travail et de chauffage de l'inducteur, pour protéger ainsi ladite partie environnante de l'élément de moteur de la pénétration par le flux de dispersion issu du conducteur, et du chauffage par induction par ce flux.

16. Dispositif de chauffage par induction selon la revendication 15, dans lequel ledit anneau formant écran de flux (50) possède une surface d'appui annulaire plate disposée concentriquement autour de l'axe (A) dudit inducteur (28) et dans un plan perpendiculaire à cet axe, pour se positionner dans ledit contact par aire de surface et sous pression avec ladite partie dudit élément de moteur qui entoure immédiatement ladite insertion de siège de soupape (16).

17. Dispositif de chauffage par induction selon la revendication 16, dans lequel ladite surface d'appui annulaire plate dudit anneau écran de flux possède un diamètre intérieur inférieur au diamètre extérieur (O) de ladite insertion annulaire de siège de soupape et est agencée pour être également en contact par aire de surface et sous pression avec la partie de ladite insertion de siège de soupape qui entoure ladite surface conique de siège de soupape dans ladite position de travail et de chauffage dudit inducteur.

18. Dispositif de chauffage par induction selon la revendication 15, dans lequel ledit anneau formant écran de flux est agencé pour être également en contact par aire de surface et sous pression avec la partie de ladite insertion de siège de soupape qui entoure ladite surface conique de siège de soupape (24) dans ladite position de travail et de chauffage dudit inducteur.

19. Dispositif de chauffage par induction selon l'une quelconque des revendications 15 à 18, dans lequel ledit anneau écran de flux (50) est monté coulissant sur lesdits moyens supports (48) pour décrire un mouvement de translation alternative sur ces moyens supports dans la direction axiale dudit inducteur (28) et où ledit dispositif (10) comprend des moyens (58) qui sollicitent ledit anneau écran de flux (50) dans la direction axiale dudit inducteur (28), dans le sens approprié pour presser ledit anneau (50) contre ladite partie environnante de l'élément du moteur et le maintenir en contact par aire de surface avec cette partie dans ladite position de travail et de chauffage dudit inducteur.

20. Dispositif de chauffage par induction selon la revendication 19, dans lequel lesdits moyens de sollicitation comprennent des moyens (58) du type ressort de compression hélicoïdal comprimés entre lesdits moyens supports (48) et ledit anneau formant écran de flux (50).

21. Dispositif de chauffage par induction selon la revendication 19 ou la revendication 20 et comprenant des moyens de butée du type épaulement (60, 62) prévus sur lesdits moyens supports (48) pour limiter le mouvement de coulissement dudit anneau écran de flux (50) sur lesdits moyens supports (48) sous la sollicitation desdits moyens de sollicitation (58) dans une position axiale limite par rapport auxdit inducteur dans laquelle ledit anneau est en contact avec ladite partie environnante de l'élément du moteur pendant le mouvement axial desdits moyens supports et de l'inducteur qui rapproche ces moyens et cet inducteur de leurs positions de travail et de chauffage avant que l'inducteur n'atteigne ladite position de travail et de chauffage.

22. Dispositif de chauffage par induction selon la revendication 21, dans lequel ledit anneau écran de flux (50) est muni d'un manchon cylindrique (54) coaxial audit inducteur (28) et qui peut coulisser sur lesdits moyens supports (48), ledit manchon (54) pouvant être mis en prise avec lesdits moyens de butée (60, 62) du type épaulement pour positionner ledit anneau (50) dans ladite position axiale limite de cet anneau.

23. Dispositif de chauffage par induction selon la revendication 21 ou la revendication 22, dans lequel lesdits moyens de butée du type épaulement comprennent une bague fendue (62) montée dans une gorge annulaire desdits moyens supports (48).

24. Dispositif de chauffage par induction selon l'une quelconque des revendications 15 à 23, dans lequel ledit anneau écran de flux (50) est fait de cuivre.

25. Dispositif de chauffage par induction selon l'une quelconque des revendications 15 à 24, dans lequel ledit anneau écran de flux (50) est creux et muni de moyens (66, 68) permettant d'y faire circuler un réfrigérant.

FIG. 1

0 041 317

FIG. 2

FIG. 3

2